# EUROPEAN PATENT APPLICATION

(11) **EP 4 636 832 A1**
(43) Date of publication of application: **22.10.2025**
(21) Application number: 24872859.4
(22) Date of filing: 24.09.2024
(51) Int. Cl.: H01M 4/04, H01M 4/13, G01N 23/083, H01M 4/02

(54) **ELECTRODE MANUFACTURING SYSTEM, ELECTRODE MANUFACTURING METHOD, AND ELECTRODE**

(30) Priority: 25.09.2023 KR 20230128329
(71) Applicant: LG Energy Solution, Ltd., Seoul 07335 (KR)
(72) Inventor: KWON, O Jong, Daejeon 34122 (KR); KO, Nam Gyu, Daejeon 34122 (KR); AN, In Gu, Daejeon 34122 (KR); KIM, Kwang Jin, Daejeon 34122 (KR); LEE, Da Young, Daejeon 34122 (KR); HAN, Geum Jae, Daejeon 34122 (KR)
(74) Representative: Plasseraud IP
(86) International application number: PCT/KR2024/014382
(87) International publication number: WO 2025/071151

(57) **Abstract**

An electrode manufacturing system according to an exemplary embodiment of the present disclosure includes: a coating part comprising a first coating part for applying an electrode slurry to a first surface of a current collector and a second coating part for applying an electrode slurry to a second surface of the current collector; an air spraying part; and a drying part, wherein the air spraying part is disposed on a transfer path between the second coating part and the drying part.

By moving an electrode slurry in the direction of an uncoated part by spraying air at a fat-edge of a second electrode active material layer caused by a sliding region of a first electrode active material layer formed on the first surface of the current collector, the formation of the fat-edge can be prevented.

## Description

### [Technical Field]

This application claims the benefit of priority from Korean Patent Application No. 10-2023-0128329, filed on September 25, 2023, the disclosures of which are incorporated herein by reference.

The present disclosure relates to an electrode that prevents the occurrence of a fat-edge in a double-sided electrode having a structure in which an electrode active material layer stacked on both sides of a current collector, a manufacturing system of such an electrode, and a manufacturing method of the electrode.

### [Background]

With increasing technological development and demand in industrial fields such as mobile devices, automobiles, and energy storage devices, the demand for batteries as energy sources is rapidly increasing. Among such secondary batteries, lithium secondary batteries with high energy density and discharge voltage have been extensively researched, commercialized, and widely used.

Secondary batteries are classified according to the shape of the battery case into cylindrical batteries and prismatic batteries, where the electrode assembly is housed in cylindrical or prismatic metal cans, and pouch-type batteries where the electrode assembly is housed in a pouch-type case made of aluminum laminate sheet.

In addition, the electrode assembly housed in the battery case is a power generating element capable of charging and discharging, comprising a positive electrode/separator/negative electrode laminated structure, and example types include: a jelly-roll type electrode assembly where a separator is interposed between long sheet-type positive and negative electrodes coated with electrode mixture including an electrode active material and wound; a stack-type (laminate-type) electrode assembly where a plurality of positive and negative electrodes punched and notched in a unit of a predetermined size are sequentially stacked with separators interposed; and a stack/folding type electrode assembly where bi-cells or full cells, formed by stacking a predetermined unit of positive and negative electrodes with separators interposed, are wound.

The positive electrode and negative electrode constituting the electrode assembly are manufactured by coating an electrode slurry, prepared in a mixing process, through a slot-die in a predetermined pattern and uniform thickness onto an electrode current collector, followed by drying. In this electrode process, fat-edge may form at both edges in the transverse direction (TD) of the electrode, where the electrode active material layer becomes thicker than the surrounding electrode active material layer for various reasons. When such fat-edge exists on the electrode, it can damage the current collector during the rolling process, potentially causing safety issues. Additionally, during the stacking of a plurality of positive/negative electrodes and separators, the fat-edge can damage other electrodes or separators. Particularly for positive electrodes, when they have higher capacity compared to negative electrodes, lithium can be deposited, and fat-edge can cause reversal of the NP-Ratio between positive/negative electrodes, potentially leading to battery safety issues.

To prevent such fat-edge occurrence, methods include adjusting the transverse direction (Y-axis direction) spread width length of the electrode slurry during coating, the separation distance between the slot-die and current collector, and the electrode slurry temperature. However, when applying these to mass production processes, there are inconveniences in resetting these conditions to optimized conditions during the coating step, and even after optimizing these conditions, if issues such as temporal changes in the electrode slurry occur, the spreading characteristics of the slurry change, and the continuous process has to be stopped for a period of time and the condition optimization has to be performed again accordingly.

Therefore, technical development is needed for an electrode manufacturing system and manufacturing method that can prevent the fat-edge occurrence without stopping the electrode process.

### [Summary]

### [Technical Problem]

The problem to be solved by the technical idea of the present disclosure is to provide an electrode that prevents the occurrence of the fat-edge in the double-sided electrode having a structure in which the electrode active material layer stacked on both sides of the current collector, a manufacturing system of the electrode, and a manufacturing method of the electrode.

### [Technical Solution]

According to one embodiment of the present disclosure, an electrode manufacturing system is provided. The electrode manufacturing system includes a coating part including a slot-die configured to discharge an electrode slurry, and a coating roller disposed spaced apart from the slot-die and configured to support a current collector; an air spraying part configured to spray air toward a surrounding area of a boundary of a coated part and an uncoated part of an electrode carried out from the coating part; and a drying part for drying the electrode slurry, wherein the coating part comprises a first coating part for applying the electrode slurry to a first surface of the current collector and a second coating part for applying the electrode slurry to a second surface of the current collector, wherein the air spraying part may be disposed on a transfer path between the second coating part and the drying part.

In the electrode manufacturing system according to one embodiment, the electrode may be configured to be transferred sequentially via the first coating part, the drying part, the second coating part, the air spraying part, and the drying part.

In the electrode manufacturing system according to one embodiment, the air spraying part may be configured to spray air in an inclined direction with respect to an imaginary extended line of a flat surface of the coated part.

In the electrode manufacturing system according to one embodiment, the air spraying part may be configured so as to enable adjustment of an angle of an air spraying direction.

The electrode manufacturing system according to one embodiment may further include: a measuring part configured to measure a coating amount of the electrode slurry applied to the coated part; and an air spraying part controller configured to adjust an air spraying angle, an air spraying position, and an air spraying intensity based on the coating amount received from the measuring part.

In the electrode manufacturing system according to one embodiment, the measuring part may be configured to calculate the coating amount of the electrode slurry in real time based on an X-ray absorption method.

In the electrode manufacturing system according to one embodiment, the measuring part may be configured to calculate the coating amount of the electrode slurry in real time based on a measuring distance from a measuring position to the coated part.

In the electrode manufacturing system according to one embodiment, the measuring part may be disposed downstream of a slot-die of the second coating part.

In the electrode manufacturing system according to one embodiment, the measuring part may be configured to measure near the boundary of the coated part and the uncoated part.

In the electrode manufacturing system according to one embodiment, the slot-die may include: two or more die blocks; and a shim plate interposed between the die blocks to form a slot.

According to another embodiment of the present disclosure, an electrode manufacturing method is provided. The electrode manufacturing method including: a first coating step of applying an electrode slurry to a first surface of a current collector to be transferred; a first drying step of drying the electrode slurry applied to the first surface; a second coating step of applying the electrode slurry to a second surface of the current collector to be transferred; and a step of measuring a coating amount of the electrode slurry near a boundary between a coated part and an uncoated part; a step of determining whether a fat-edge is present based on the measured coating amount; a step of spraying air at the fat-edge to remove the fat-edge when the fat-edge is determined to be present; and a second drying step of drying the electrode slurry applied to the second surface.

In the electrode manufacturing method according to one embodiment, the electrode slurry may be a positive electrode slurry.

The present disclosure provides, according to another embodiment, an electrode for a secondary battery. The electrode comprising: a current collector; and first and second electrode active material layers formed on one side and the other side of the current collector, respectively, wherein the first electrode active material layer comprises first sliding region inclined with a plane of the current collector, the second electrode active material layer comprises second sliding region inclined with a plane of the current collector, and wherein when the first electrode active material layer rotated 180° is overlapped with the second electrode active material layer, an inclined surface of the second sliding region may comprise a concave part having an interior recessed shape with respect to the inclined surface of the first sliding region.

The electrode may be a positive electrode.

### [Advantageous Effects]

According to exemplary embodiments of the present disclosure, the double-sided electrode without fat-edge is provided by spraying air onto the fat-edge of the second electrode active material layer caused by the sliding region of the first electrode active material layer formed on the first surface of the current collector, thereby moving the electrode slurry towards the uncoated part.

In addition, according to an exemplary embodiment of the present disclosure, the air spraying part configured to spray air toward the boundary between the coated part and the uncoated part of the electrode need only be installed in a conventional electrode process line, and thus, the electrode without the fat-edge can be manufactured in a comparatively easy manner, with the advantage that the production efficiency is not decreased because the continuous longitudinal electrode process does not need to be stopped.

### [Brief Description of the Drawings]

FIG. 1 is a diagram illustrating a double-sided electrode manufacturing method according to the conventional art.
FIG. 2 is a cross-sectional view illustrating an electrode having a fat-edge.
FIG. 3 is a diagram illustrating a result of measuring the thickness of an electrode active material layer located within the dotted line of FIG. 2.
FIG. 4 is a mimeticdiagram illustrating a double-sided electrode manufacturing system according to exemplary embodiments.
FIG. 5 is a schematic diagram illustrating a double-sided electrode manufacturing system according to exemplary embodiments.
FIG. 6 is an exploded perspective view illustrating a slot-die according to exemplary embodiments.
FIG. 7 is a schematic view illustrating an air spraying part according to exemplary embodiments of the present disclosure.
FIG. 8 is a flowchart describing a double-sided electrode manufacturing method according to exemplary embodiments.
FIG. 9 is a cross-sectional view illustrating an electrode according to exemplary embodiments.

### [Description of Reference Numerals]

10,20: electrode
11,21: current collector
12,22: first electrode active material layer
13,23: second electrode active material layer
100: electrode manufacturing system
110: first coating part
110': second coating part
120: air spraying part
130: drying part

### [Detailed Description]

Hereinafter, the present disclosure will be described in more detail to provide a better understanding of the present disclosure.

Terms and words used in the present specification and claims should not be construed as limited to general or dictionary terms and should be interpreted with the meaning and concept in accordance with the technical idea of the present disclosure based on the principle that the inventors have appropriately defined the concepts of terms in order to explain the invention in the best way.

The terms used in this specification are used only to describe exemplary embodiments and are not intended to limit the present disclosure. Singular expressions include plural expressions unless otherwise clearly indicated by the context.

In this specification, terms such as "include," "comprise," or "have" should be understood to specify the presence of features, numbers, steps, components, or combinations thereof that have been implemented, and should not be construed as excluding the presence or possibility of addition of one or more other features, numbers, steps, components, or combinations thereof.

In this specification, the term "combinations thereof" included in a Markush-type expression means one or more mixtures or combinations selected from the group consisting of components listed in the Markush-type expression, which means including one or more selected from the group consisting of the components.

In this specification, the indication "A and/or B" means "A or B or both."

In this specification, "%" means wt.% unless explicitly indicated otherwise.

In this specification, the transverse direction (TD) of the current collector and electrode is defined as the Y-axis direction, the machine direction (MD) of the current collector and electrode is defined as the X-axis direction, and the thickness direction of the electrode is defined as the Z-axis direction, wherein the X-axis direction and Y-axis direction are referred to as the horizontal direction.

In this specification, the coated part is defined as a portion where the electrode slurry is coated on the electrode substrate, and the uncoated part is defined as a portion where the current collector is exposed without the electrode slurry being coated on the electrode substrate.

### (first embodiment)

The present disclosure provides an electrode manufacturing system as a first embodiment.

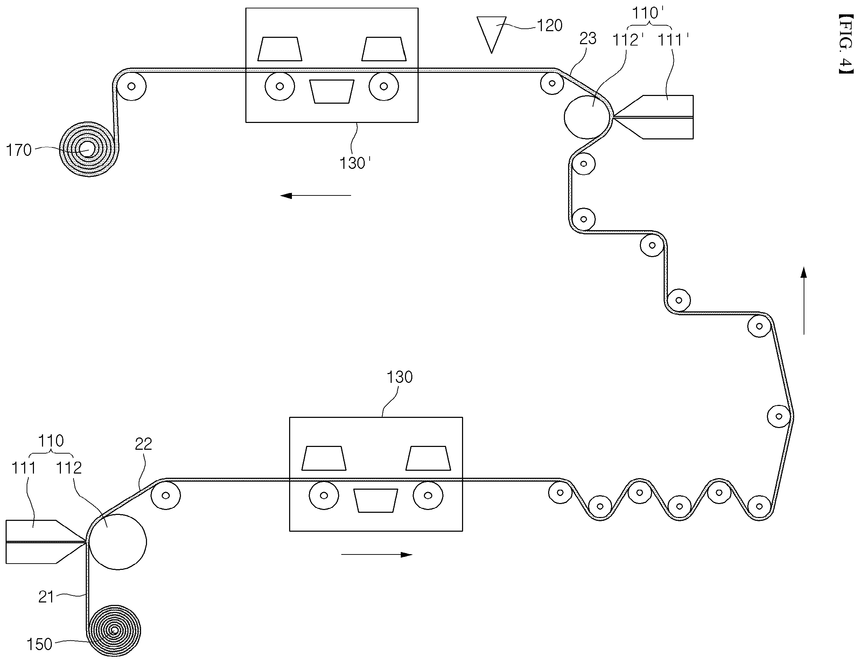

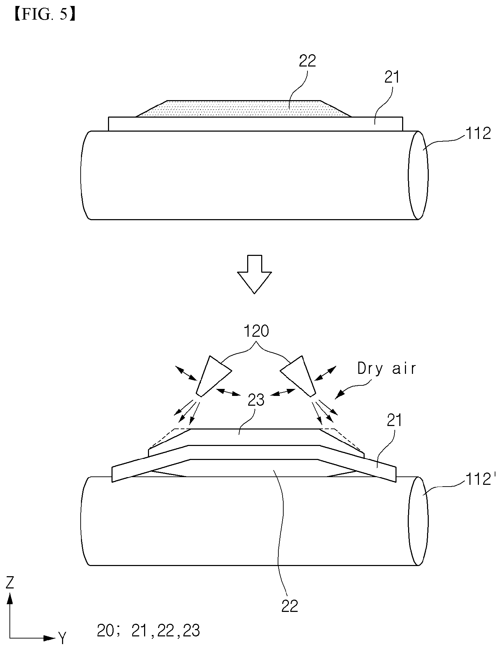

FIG. 4 is a mimeticdiagram illustrating an electrode manufacturing system according to exemplary embodiments, and FIG. 5 is a schematic diagram illustrating an electrode manufacturing system according to exemplary embodiments.

Referring to these drawings, the electrode manufacturing system according to exemplary embodiments may include a coating part 110, 110', an air spraying part 120, and a drying part 130, 130', wherein the coating part may consist of a first coating part 110 and a second coating part 110', and the air spraying part 120 may be disposed on a transfer path between the second coating part 110' and the drying part 130'. In other words, the air spraying part 120 is disposed on the transfer path between the second coating part 110' and the drying part 130', but is not disposed on the transfer path between the first coating part 110 and the drying part 130. The electrode manufacturing system is a system for manufacturing electrodes by coating and drying an electrode slurry onto a current collector 21 being transferred in a roll-to-roll manner.

The inventors of the present disclosure have conducted a long-term study on the cause of a fat-edge formation in the manufacture of double-sided electrodes and have found that the fat-edge mainly occurs in an electrode active material layer on the back side of the current collector, which led to the present disclosure.

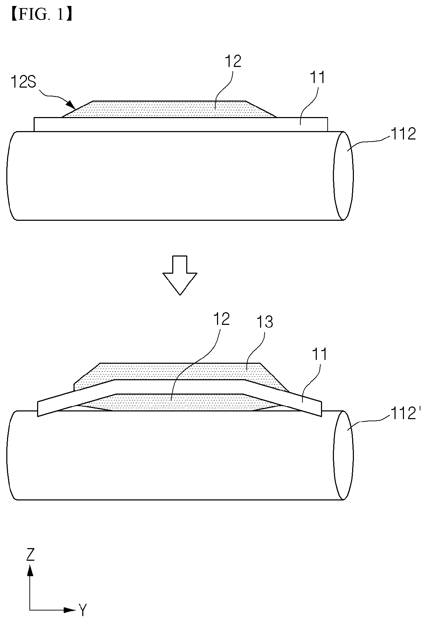

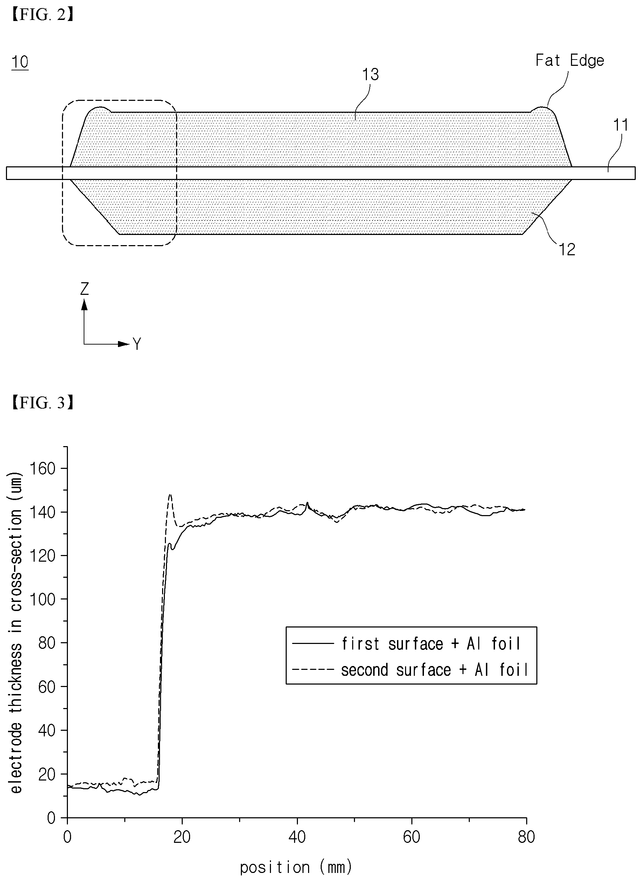

FIG. 1 is a diagram illustrating a double-sided electrode manufacturing method according to the conventional art, FIG. 2 is a cross-sectional view illustrating a double-sided electrode having a fat-edge manufactured according to the conventional art, and FIG. 3 is a diagram illustrating a result of measuring the thickness of an electrode active material layer located within the dotted line of FIG. 2.

According to a conventional double-sided electrode manufacturing method, a first coating step of applying an electrode slurry to a first surface of a current collector 11 to form a first electrode active material layer 12 is followed by a second coating step of applying the electrode slurry to a second surface of the current collector 11.

Referring to FIG. 1, the transverse direction (Y-axis direction) both sides edges of the first electrode active material layer 12 formed in the first coating step include a sliding region 12S in which the end surface of the first electrode active material layer 12 is inclined with respect to the plane of the current collector 11. Since the first electrode active material layer 12 including the sliding region faces a coating roller 112' in the second coating step, and since the sliding region 12S has a smaller thickness compared to a portion that is not the sliding region, the edge part of the traverse direction (Y direction) of the current collector 11 that is in contact with the coating roller 112' has a slightly bent shape in accordance with the inclined angle of the sliding region as shown in FIG. 1. In such a state, when the electrode slurry is applied to the second surface of the current collector 11, the coating amount of the electrode slurry applied near the point (arrow) where the current collector 11 begins to bend downward slightly may be more than the coating amount of the electrode slurry applied to the flat region parallel to the horizontal direction (Y-axis direction) of the current collector 11. Accordingly, the second electrode active material layer 13 of the corresponding portion includes a fat-edge of a shape protruding upwardly in the thickness direction (Z-axis direction) compared to the surrounding second electrode active material layer (refer to FIGS. 2 to 3).

As described above, since the thickness of the sliding region 12S of the first electrode active material layer 12 formed on the first surface of the current collector 11 is relatively smaller compared to the flat part, the current collector 11 of the electrode is slightly bent downward in accordance with the shape of the sliding region 12S of the first electrode active material layer 12 in the second coating step. When the electrode slurry is coated while the current collector 11 is bent downward, the fat-edge is generated which is flat based on the electrode surface, but in which the coating thickness of the electrode slurry is thicker than the flattened region based on the plane of the current collector.

According to an exemplary embodiment of the present disclosure, the air spraying part 120 is configured to spray air toward the sliding region, specifically the fat-edge, of the electrode 20 carried out from the second coating part 110', so that the electrode slurry in the portion where the air is sprayed is moved to the surrounding by the air spraying pressure, and thus the coating thickness of the electrode slurry of the corresponding portion is reduced. Accordingly, the fat-edge does not occur at the edge parts on both sides of the traverse direction (Y direction) of the second electrode active material layer 23.

The coating parts 110, 110' may be configured to discharge an electrode slurry onto the current collector 21 transferred in one direction. The coating parts 110, 110' apply the electrode slurry on the collector 21 to have a predetermined width length and thickness, and the applied electrode slurry becomes the electrode active material layer 12 via the drying parts 130, 130'.

The electrode slurry may be a mixture of an electrode active material, a binder, a conductive material and a solvent, and the electrode active material may be a positive electrode active material or a negative electrode active material. The binder may be a polymeric additive for structural stability of the electrode, and the conductive material may be a carbon-based additive having electrical conductivity.

The coating parts 110, 110' may include slot-dies 111, 111' configured to discharge the electrode slurry; and coating rollers 112, 112' disposed spaced apart from the slot-dies and for supporting the electrode sheet.

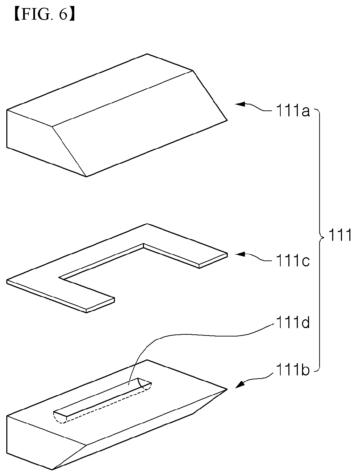

FIG. 6 is an exploded perspective view of a slot-die according to exemplary embodiments. Referring to FIG. 6, the slot-die 111 may include two die blocks 111a, 111b; and a shim plate 111c. The shim plate 111c may be interposed between the two die blocks 111a, 111b, which may be engaged and mutually coupled by a plurality of bolt members. At least one of the two die blocks may be provided with a manifold 111d accommodating a certain volume of electrode slurry, and the manifold 111d may be connected with an electrode slurry supply part (not shown) at the outside.

While FIG. 6 illustrates a slot-die having two die blocks, the number of die blocks is not limited thereto, and may be two or more. Specifically, two die blocks may be needed to coat a single electrode slurry, and three or more die blocks may be needed to coat two or more electrode slurries. In other words, the die blocks may be two or more.

The coating rollers 112,112' may be configured to support the current collector 21 and transfer in the transfer direction when the electrode slurry is discharged from the slot-dies 111,111'. The coating rollers 112,112' may be spaced apart from the lower portion of the slot-dies 111,111' based on the current collector 21.

The coating parts 110, 110' may comprise the first coating part 110 for applying the electrode slurry to the first surface of the current collector 21 and the second coating part 110' for applying the electrode slurry to the second surface of the current collector 21 in order to manufacture a double-sided electrode having a structure in which the electrode active material layer is stacked on both sides of the current collector 21. The second coating part 110' differs from the first coating part 110 only in the installation position, but the type of electrode slurry applied to the current collector 21 and the application method are the same.

The drying part 130 is configured to apply thermal energy to the electrode slurry applied on the current collector 21 so that the electrode slurry can be dried. The drying part may comprise the first drying part 130 for drying the electrode slurry applied to the first surface of the current collector 21 and the second drying part 130' for drying the electrode slurry applied to the second surface of the current collector 21, for drying the double-sided electrode having a structure in which the electrode active material layer is stacked on both sides of the current collector 21. The second drying part 130' may differ from the first drying part 130 only in the installation position, and the drying method may be the same.

The drying parts 130, 130' may include drying means, wherein the drying means may include a hot air supply part configured to spray hot air toward the electrode slurry applied on the current collector 21 and/or a heater configured to irradiate radiant heat. The current collector to which the electrode slurry is applied is via the drying parts 130,130' and the drying of the electrodes is obtained by the thermal energy applied by the drying means.

The air spraying part 120 may be configured to spray air toward the sliding region, more specifically the fat-edge, of the electrode 20 carried out from the second coating part 110'.

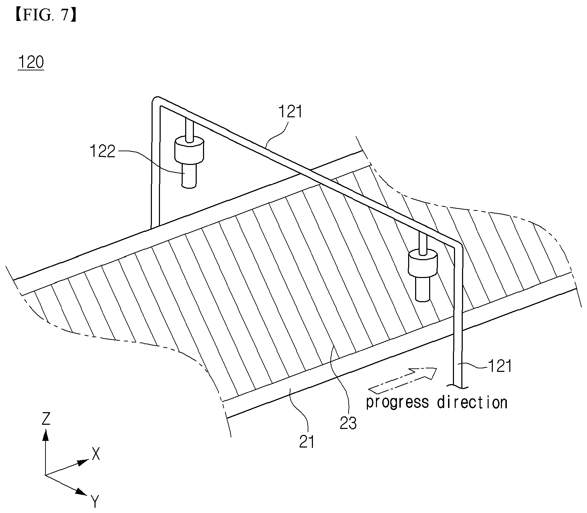

FIG. 7 is a schematic view illustrating an air spraying part according to exemplary embodiments of the present disclosure.

Referring to FIGS. 4 to 5 and FIG. 7, in order to reduce the thickness of the fat-edge at the width direction (Y-axis direction) edge part of the second electrode active material layer 23 formed on the second surface of the current collector 21, the air spraying part 120 can move the electrode slurry of the fat-edge to the surrounding area by spraying air toward the fat-edge part of the electrode 20.

After the electrode slurry is completely dried, it is difficult to move the electrode slurry toward the uncoated part by air spraying, and thus the air spraying part 120 is preferably disposed before the electrode 20 is inserted into the second drying part 130'.

In one embodiment, the air spraying part 120 may be disposed on a transfer path between the second coating part 110' and the second drying part 130'. Here, the transfer path between the second coating part 110' and the second drying part 130' is meant to include both the transfer path of the second coating part 110' and the transfer path between the second coating part 110' and the front end of the second drying part 130'.

The transfer path of the second coating part 110' is a transfer path adjacent to the slot-die 111', and may be meant a transfer path until the electrode 20 is carried out from the coating roller 112'.

The transfer path between the second coating part 110' and the front end of the second drying part 130' may be meant a transfer path after the electrode 20 is carried out from the coating roller 112' but before it is inserted into the second drying part 130'.

Accordingly, in the electrode manufacturing system 100 of the electrode according to the present disclosure, the electrode 20 may be transferred sequentially via the first coating part 110, the first drying part 130, the second coating part 110', the air spraying part 120, and the second drying part 130'.

Referring to FIG. 7, in one embodiment, the air spraying part 120 may include an air pipe 121, a nozzle 122, and an air supply part (not shown). The air supply part may be configured to supply compressed air to the air pipe 121. The air pipe 121 may be a pipe through which air flows. The air pipe 121 may be installed side by side in a width direction (Y-axis direction) of the electrodes. At least one nozzle 122 may be installed in the air pipe 121. The at least one nozzle 122 may be equipped with a nozzle valve (not shown). Through opening and closing of the respective nozzle valve, air flowing in the air pipe may be sprayed outside through the nozzle. Further, the amount of air to be sprayed may be adjusted according to the degree to which the nozzle valve is opened and closed.

Referring to FIG. 5, in one embodiment, the air spraying part 120 may be configured to spray air in an inclined direction with respect to an imaginary extended line of the flat surface of the coated part. Accordingly, the electrode slurry of the relatively thickly coated portion may be moved to the surrounding area by the high-pressure air sprayed from the air spraying part 120.

Further, the air spraying part 120 may be configured to enable adjusting an angle of the air spraying direction. Accordingly, the direction of the air sprayed can be adjusted appropriately.

Referring to FIG. 7, the air spraying part 120 may be disposed on both sides of the edge along the width direction (Y-axis direction) of the electrode 20, and two or more air spraying parts 120 may be spaced apart along the transfer direction (X-axis direction) of the electrode 20.

The electrode manufacturing system 100 according to one embodiment may further include a measuring part (not shown) configured to measure a coating amount of the electrode slurry applied to the coated part, and an air spraying part controller (not shown) configured to adjust an air spraying angle, an air spraying position, and an air spraying intensity based on the coating amount received from the measuring part.

In one embodiment, the measuring part may be configured to measure in real time the coating amount of the electrode slurry near the boundary between the coated part and the uncoated part. Here, near the boundary between the coated part and the uncoated part is the edge on both sides in the width direction (Y-axis direction) of the second electrode active material layer 23 formed from the electrode slurry coated on the second surface of the current collector 21. Since the fat-edge occurs near of the boundary between the coated part and the uncoated part, specifically at a point where the thickness of the electrode active material layer in the width direction (Y-axis direction) of the electrode begins to decrease, the measuring part is configured to measure near the boundary between the coated part and the uncoated part.

When the air spraying part 120 sprays air, such that the air spraying conditions such as the air spraying angle, the air spraying position, and the air spraying intensity are optimized, the measuring part may be configured to measure the coating amount of electrode slurry on the edge part of the electrode in real time, and to transmit the measurement information to the air spraying part controller.

Moreover, the air spraying part controller may be configured to determine, based on the measurement information received in real time, whether a fat-edge exists at the edge part on both sides of the width direction of the electrode 20. The existence of the fat-edge may be determined by comparing the measurement information received from the measuring part with a predetermined coating amount at the edge part in the width direction (Y-axis direction) of the electrode active material layer or a predetermined thickness length of the electrode active material layer.

In addition, the air spraying part controller may be configured to determine, based on the measurement information received in real time, an appropriate level of any one or more of the angle of air spraying from the air spraying part, the position of air spraying, and the intensity of air spraying, in order to reduce the coating amount of the electrode slurry or the coating thickness of the electrode slurry where the fat-edge exists. For this, the air spraying part controller may be pre-input with appropriate air spraying conditions based on the coating amount of the electrode slurry where the fat-edge exists or the coating thickness of the electrode slurry.

In one embodiment, the measuring part may be configured to calculate the coating amount of the electrode slurry in real time based on an X-ray absorption method. Such a measuring part may be exemplified by a web-gauge.

In another embodiment, the measuring part may be configured to calculate a coating amount of the electrode slurry in real time based on a measured distance from a measurement location to the coated part. Such a measuring part may exemplify a confocal sensor.

The installation position of the measuring part is not particularly limited, but it is preferably installed at or downstream of the second coating part at a position where it is possible to check whether a fat-edge occurs. Specifically, it is preferably disposed downstream of the slot-die 111' of the second coating part 110'. However, it is not limited thereto, and it may be disposed downstream of the second coating part, but on the transfer path of the front end of the second drying part, or it may be disposed downstream of the second drying part.

The electrode manufacturing system 100 according to one embodiment may include an unwinder part 150 provided at the front end of the first coating part 110 to supply the current collector 21 to the first coating part 110; and a rewinder part 170 formed at the rear end of the second coating part 110' to wind the electrode 20 after coating and drying of the electrode slurry are completed. The current collector 21 in the form of a metal foil may be supplied in a wound state to the unwinder part 150. The supplied current collector may be wound in the rewinder part 170 after sequentially passing through the first coating part 110, the first drying part 130, the second coating part 110', the air spraying part 120, and the second drying part 130'. After the double-sided coating and drying of the electrode slurry is completed, the electrode may be wound in the rewinder part 170 and manufactured as an electrode through the next step of a slitting part or a punching part or the like.

The electrode manufacturing system according to one embodiment may include a conveyor line for continuous transfer of the electrode collector 21 after it is supplied from the unwinder part 150 until it is wound in the rewinder part 170. The conveyor line may be configured to continuously supply and transfer the electrode current collector 21, such that the electrode current collector 21 sequentially passes through the first coating part 110, the first drying part 130, the second coating part 110', the air spraying part 120, and the second drying part 130'.

### (second embodiment)

The present disclosure provides an electrode manufacturing method as a second embodiment.

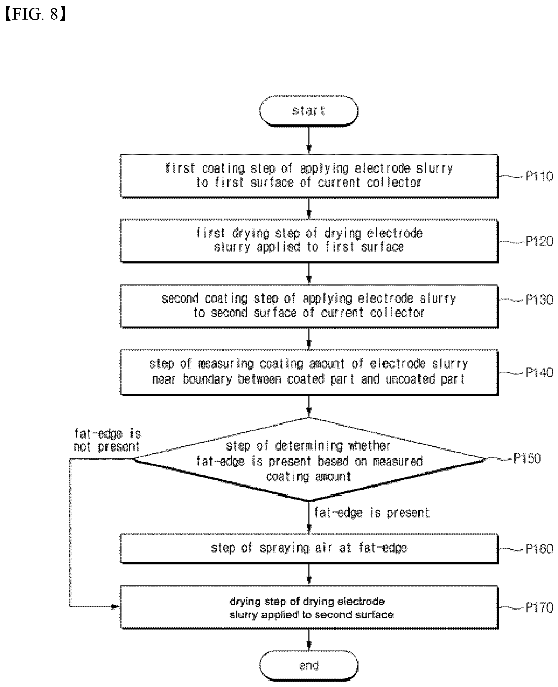

FIG. 8 is a flowchart describing an electrode manufacturing method according to exemplary embodiments of the present disclosure.

Referring to FIG. 8, an electrode manufacturing method according to exemplary embodiments includes a first coating step (P110) of applying an electrode slurry to a first surface of a current collector to be transferred; a first drying step (P120) of drying the electrode slurry applied to the first surface; a second coating step (P130) of applying the electrode slurry to a second surface of the current collector to be transferred; a step (P140) of measuring a coating amount of the electrode slurry near a boundary of the coated part and the uncoated part; a step (P150) of determining whether a fat-edge is present based on the measured coating amount; a step (P160) of spraying air at the fat-edge to remove the fat-edge when the fat-edge is determined to be present; and a second drying step (P170) of drying the electrode slurry applied to the second surface.

The electrode manufacturing method according to exemplary embodiments may include measuring the coating amount of the electrode slurry applied to the second surface of the current collector in real time, determining whether the fat-edge is occurred along an edge of the electrode width direction (Y-axis direction) based on the measured coating amount information, and when it is determined that the fat-edge is occurred, spraying air at the fat-edge to remove the fat-edge so that the electrode slurry at the fat-edge spreads toward the uncoated part, thereby preventing the formation of the fat-edge.

In addition, the coating step and the drying step of the electrode slurry are continuous in the electrode process, the formation of the fat-edge at the edge part in the width direction of the electrode can be prevented without the stoppage of the process, thereby improving the production efficiency.

The electrode manufacturing method according to one embodiment may be performed by the electrode manufacturing system 100.

The first coating step (P110) and the second coating step (P130) may be performed by the first and second coating parts 110, 110', respectively, and the first drying step (P120) and the second drying step (P170) may be performed by the first and second drying parts 130, 130', respectively, The step (P140) of measuring the coating amount may be performed by the measuring part, the step (P150) of determining whether the fat-edge is present may be performed by the air spraying part controller, and the step (P160) of spraying air at the fat-edge may be performed by the air spraying part.

The specific description of the first coating step (P110) to the second drying step (P170) has been described in detail previously, and thus a redundant description will be omitted.

### (third embodiment)

The present disclosure provides an electrode for lithium secondary battery as a third embodiment.

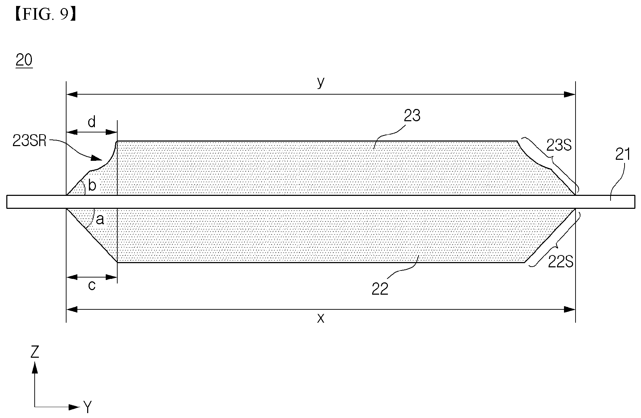

FIG. 9 is a cross-sectional view illustrating an electrode according to exemplary embodiments.

Referring to FIG. 9, an electrode 20 according to exemplary embodiments includes a current collector 21; and first and second electrode active material layers 22,23 formed on a first and second surface, respectively, of the current collector, wherein the first electrode active material layer 22 includes a first sliding region 22S inclined with a plane of the current collector 21, and the second electrode active material layer 23 includes a second sliding region 23S inclined with a plane of the current collector 21.

The first electrode active material layer is formed from the electrode slurry coated on the first surface of the current collector as described above, and the second electrode active material layer is formed from the electrode slurry coated on the second surface of the current collector. After the second coating part applies the electrode slurry to the second surface of the current collector as described above, the air spraying part sprays high-pressure air at a portion on which the electrode slurry is applied where a fat edge is expected to occur, specifically, at the edge part on both sides in the traverse direction (Y direction), wherein the coated portion of the electrode slurry on which the air is sprayed may have a recessed shape due to the pressure of the air.

Accordingly, the shape of the second sliding region formed by the air spraying process and the shape of the first sliding region formed without the air spraying process are different. Specifically, when the second electrode active material layer and the first electrode active material layer rotated by 180° are overlapped, the inclined surface of the second sliding region 23S may comprise a concave part 23SR having an interior recessed shape with respect to the inclined surface of the first sliding region 22S.

When the electrode is a positive electrode, if the sliding region includes the concave part, the capacity of the sliding region facing the negative electrode is reduced, resulting in decreasing the risk of NP Ratio inversion in the corresponding portion.

In one embodiment, the traverse direction (TD, Y direction) length y of the second electrode active material layer 23 may be 0.99 to 1.01, preferably 1, of the transverse direction length x of the first electrode active material layer 22. In the manufacture of the electrode, it is designed so that the y value and the x value are the same, but by tolerance, the y may be in the range of 0.99 to 1.01 of the x. In addition, it is preferable that the thickness T2 of the second electrode active material layer 23 and the thickness T1 of the first electrode active material layer are the same.

In one embodiment, the angle b between the inclined surface of the second sliding region 23S and the plane of the current collector 21 may be in the range of 0.99 to 1.01, preferably 1, of the angle a between the inclined surface of the first sliding region 22S and the plane of the current collector 21. In the manufacture of the electrode, it is designed so that the b value and the a value are equal, but by tolerance, the b may be in the range of 0.99 to 1.01 of the a.

In one embodiment, a transverse direction length d of the second sliding region 23S may be from 0.99 to 1.01, preferably 1, of a transverse direction length c of the first sliding region 22S. In the manufacture of the electrode, it is designed so that the d value and the c value are equal, but by tolerance, the d may be in the range of 0.99 to 1.01 of the c.

As aforementioned, the present disclosure has been described in more detail through the drawings and embodiments, etc. However, since the configuration described in the drawings or embodiments, etc. described herein is merely one embodiment of the present disclosure and do not represent the overall technical spirit of the present disclosure, it should be understood that the present disclosure covers various equivalents, modifications, and substitutions at the time of filing of this application.

## Claims

1. An electrode manufacturing system, comprising:
a coating part comprising a slot-die configured to discharge an electrode slurry, and a coating roller disposed spaced apart from the slot-die and configured to support a current collector; an air spraying part configured to spray air toward a surrounding area of a boundary of a coated part and an uncoated part of an electrode carried out from the coating part; and
a drying part for drying the electrode slurry,
wherein the coating part comprises a first coating part for applying the electrode slurry to a first surface of the current collector and a second coating part for applying the electrode slurry to a second surface of the current collector,
wherein the air spraying part is disposed on a transfer path between the second coating part and the drying part.

2. The electrode manufacturing system of claim 1, wherein the electrode is configured to be transferred sequentially via the first coating part, the drying part, the second coating part, the air spraying part, and the drying part.

3. The electrode manufacturing system of claim 1, wherein the air spraying part is configured to spray air in an inclined direction with respect to an imaginary extended line of a flat surface of the coated part.

4. The electrode manufacturing system of claim 1, wherein the air spraying part is configured so as to enable adjustment of an angle of an air spraying direction.

5. The electrode manufacturing system of claim 1, further comprising:
a measuring part configured to measure a coating amount of the electrode slurry applied to the coated part; and
an air spraying part controller configured to adjust an air spraying angle, an air spraying position, and an air spraying intensity based on the coating amount received from the measuring part.

6. The electrode manufacturing system of claim 5, wherein the measuring part is configured to calculate the coating amount of the electrode slurry in real time based on an X-ray absorption method.

7. The electrode manufacturing system of claim 5, wherein the measuring part is configured to calculate the coating amount of the electrode slurry in real time based on a measuring distance from a measuring position to the coated part.

8. The electrode manufacturing system of claim 5, wherein the measuring part is disposed downstream of the slot-die of the second coating part.

9. The electrode manufacturing system of claim 5, wherein the measuring part is configured to measure near the boundary of the coated part and the uncoated part.

10. The electrode manufacturing system of claim 1, wherein the slot-die comprises:
two or more die blocks; and
a shim plate interposed between the die blocks to form a slot.

11. An electrode manufacturing method, comprising:
a first coating step of applying an electrode slurry to a first surface of a current collector to be transferred;
a first drying step of drying the electrode slurry applied to the first surface;
a second coating step of applying the electrode slurry to a second surface of the current collector to be transferred; and
a step of measuring a coating amount of the electrode slurry near a boundary between a coated part and an uncoated part;
a step of determining whether a fat-edge is present based on the measured coating amount;
a step of spraying air at the fat-edge to remove the fat-edge when the fat-edge is determined to be present; and
a second drying step of drying the electrode slurry applied to the second surface.

12. The electrode manufacturing method of claim 11, wherein the electrode slurry is a positive electrode slurry.

13. An electrode, comprising:
a current collector; and first and second electrode active material layers formed on one side and the other side of the current collector, respectively,
wherein the first electrode active material layer comprises first sliding region inclined with a plane of the current collector, the second electrode active material layer comprises second sliding region inclined with a plane of the current collector, and
wherein when the first electrode active material layer rotated 180° is overlapped with the second electrode active material layer, an inclined surface of the second sliding region comprises a concave part having an interior recessed shape with respect to the inclined surface of the first sliding region.

14. The electrode of claim 11, wherein the electrode is a positive electrode.
